(19) Europäisches Patentamt
European Patent Office
Office européen des brevets

(11) EP 3 012 288 A1

(12) **EUROPEAN PATENT APPLICATION**

(43) Date of publication:
27.04.2016 Bulletin 2016/17

(51) Int Cl.:
*C08K 5/00* (2006.01)       *C08K 3/00* (2006.01)
*C09J 7/02* (2006.01)       *B32B 27/32* (2006.01)

(21) Application number: 14003586.6

(22) Date of filing: 21.10.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicants:
• NITTO DENKO CORPORATION
  Osaka 567 (JP)
• NITTO EUROPE N.V
  3600 Genk (BE)

(72) Inventors:
• Forier, Bart
  3600 Genk (BE)
• Pinxten, Donald
  3600 Genk (BE)
• Hanaoka, Minoru
  Ibaraki-shi Osaka 567-8680 (JP)

(74) Representative: Grünecker Patent- und
Rechtsanwälte
PartG mbB
Leopoldstraße 4
80802 München (DE)

(54) **Pressure-sensitive adhesive film for laser beam cutting applications**

(57)    The present invention provides pressure-sensitive adhesive films with a favourable visual appearance and surface printability without discoloration and burrs on the cutting edge after short-wavelength laser machining. At the same time, the PSA films of the present invention exhibit a favourable cuttability, allowing for high fiber laser as well as carbon dioxide laser cutting speeds. Since the use of the PSA films of the present invention as surface protecting films does not require extensive cleaning and polishing operations after the cutting process and the cutting process itself may be accelerated, the efficiency of laser machining methods may be improved.

The pressure-sensitive adhesive film comprising a white resin film as a substrate and a pressure-sensitive adhesive layer provided at least on a face of the resin film, wherein, the resin film has a laser beam absorbance in the wavelength range of 1000 nm to 1100 nm of at least 0% and lower than 55%, a laser beam transmittance in the wavelength range of 1000 nm to 1100 nm of more than 5%, and a laser beam reflectance in the wavelength range of 1000 nm to 1100 nm of higher than 40%. In a preferred embodiment the resin film comprises 5 % by mass or more based on the resin film of $TiO_2$.

[Fig. 1]

**Description**

BACKGROUND OF THE INVENTION

1. Field of the Invention

The present invention relates to a pressure-sensitive adhesive (PSA) film, in particular, a PSA film suitable for surface protection applications during fiber and $CO_2$ laser cutting processes.

2. Description of the Related Art

Techniques involving laser beam machining have been widely used for cutting and hole-making, etc., of various materials. Carbon dioxide laser having a center wavelength of about 9.3 $\mu$m to 10.6 $\mu$m is a typical example of a laser used for such machining processes. For instance, in an embodiment of such laser machining, a PSA surface protection film as an auxiliary material is adhered to a surface of a work piece and a laser beam is projected onto the PSA film, whereby the work piece along with the PSA film is processed with the laser (as disclosed in JP 2004-235194 A, for example).

Due to the growing demand for laser beam machining techniques that allow fine cuts, the use of fiber lasers (solid state lasers) having wavelengths of about 1.0 $\mu$m to 1.1 $\mu$m has been rapidly growing within the metal cutting industry, in view of their ability to produce spot sizes that are up to 100 times smaller compared to those produced by carbon dioxide lasers. However, short-wavelength laser machining with conventional PSA films often results in cuts having a poor quality, and in decreasing efficiency or accuracy of the laser machining.

For the purpose of improving the cuttability with fiber laser, EP 2 679 332 A1 discloses a PSA film comprising a resin film having a multi-layer constitution and exhibiting a laser beam reflectance of 5 to 40 % or lower and a laser beam transmittance of 5 % or lower in a wavelength range of 1.0 $\mu$m to 1.1 $\mu$m. Such multilayer resin films are laminates of layers having different lightness properties, which may be achieved as required by adding appropriate amounts of black-based (e.g. carbon black) and white-based laser beam absorbing agents (such as e.g. calcium carbonate, titanium oxide, talc or silica). However, the use of sublayers comprising black-based beam absorbing agents (in particular carbon black), while being required to ensure good cutting properties, leads to discoloration and sometimes even burrs on the cutting edge after short-wavelength laser machining, which requires extensive cleaning and polishing operations after the cutting process. In terms of a favourable visual appearance and surface printability after the fiber laser cutting process, the PSA films comprising a resin film having a multi-layer constitution without the use of black pigments such as carbon black is therefore preferable. However, films not comprising a black pigment have shown a poor cuttability in fiber laser machining. If cuttable at all, such films only allowed low laser cutting speeds, thereby slowing down the cutting process and reducing the machining efficiency.

US 2008/0014407 A1, WO 2011/122437 A1 and GB 24923048 disclose adhesive sheets comprising a base material and an adhesive layer having a plurality of through holes formed therein that pass through from one surface to the other surface. With this design, air entrapment and blistering can be prevented or eliminated, thereby improving appearance in particular of batch area adhesive sheets to be applied to an adherend by hand. EP 1184437 A2 discloses the use of a pressure-sensitive adhesive tape for providing a skid-resistant surface. US 2012/0018903 A1 discloses a film for flip chip-type semiconductor back surface adhesion to be employed during manufacturing of a semiconductor device. These prior art documents disclosing multilayer constitutions of pressure-sensitive adhesive films do not address the question of laser cutting and relate to different technical fields (decorative adhesive sheets and semiconductor manufacturing).

Accordingly, the provision of PSA films that are cuttable in fiber and $CO_2$ laser machining and overcome the above disadvantages is desirable.

BRIEF DESCRIPTION OF THE PRESENT INVENTION

The present invention solves this object with the subject matter of the claims as defined herein. Accordingly, the present invention provides a visually appealing PSA film, wherein discoloration and burrs in the cutting edge may be prevented, and which allows suitable cutting properties, such as cutting speeds, in applications where the PSA film is cut with a short-wavelength laser having a center wavelength of 1.0 $\mu$m to 1.1 $\mu$m, while also allowing cutting with another laser type, such as a carbon dioxide laser. It is noted that unlike laser abrasion, the laser beam machining technique disclosed herein relates to an ordinary laser machining such as cutting with a YAG laser having a longer pulse duration (more particularly, having a continuous output of the order of microseconds), or the like. The preferred embodiments as described below apply, as far a not otherwise indicated to both concepts A and B. Preferred embodiments of the present invention are described in the following detailed description.

BRIEF DESCRIPTION OF THE DRAWINGS

Fig. 1 shows a cross-sectional view schematically illustrating a constitutional example of the PSA film.

Fig. 2 shows a cross-sectional view schematically illustrating another constitutional example of the PSA film.

Fig. 3 shows a cross-sectional view schematically illustrating a typical example of a state of the PSA film when cut adequately with a laser beam.

DETAILED DESCRIPTION OF THE INVENTION

The present invention provides a PSA film comprising a white resin film as a substrate and a PSA layer provided at least on a face (typically, at least on one of two faces) of the resin film. The resin film in the PSA film may be a single-layer film or may have a multi-layer constitution consisting of at least two layers.

The PSA film disclosed herein comprises a PSA layer at least on a face of a resin film as a substrate. It may be a single-faced PSA film (an adhesively single-faced PSA film) having a PSA layer only on the first face of the substrate, or it may be a double-faced PSA sheet (an adhesively double-faced PSA film) having a PSA layer on each of the first and second faces of the substrate. Hereinafter, the present invention is described more in detail with a main example being an embodiment where it is applied to a single-faced PSA film while the application of the art disclosed herein is not to be limited to such an embodiment.

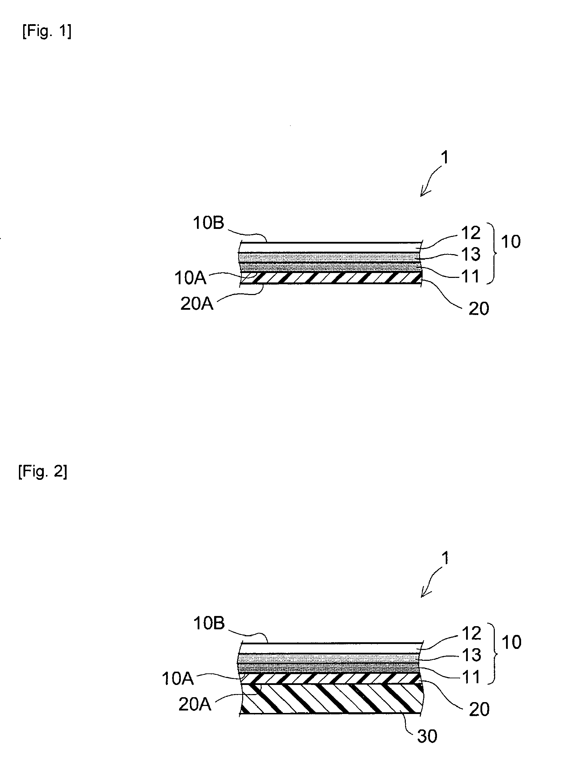

Fig. 1 shows a typical constitutional example of the PSA film provided by the present invention. PSA film 1 comprises resin film 10 as a substrate and a PSA layer 20 provided on a first face (single face) 10A thereof, and is used by adhering the PSA layer 20 to an adherend. In a preferable embodiment, the back face 10 B (opposite to the face provided with PSA layer 20) of resin film 10 comprises a releasable surface (release surface). Prior to use (i.e., before adhered to the adherend), PSA film 1 is wound in a roll such that the back face 10B of resin film 10 contacts and protects a surface (adhesive face) 20A of PSA layer 20. Alternatively, as PSA film 1 shown in Fig. 2, the surface 20A of PSA layer 20 may be protected with release liner 30 having a release surface at least on the side facing PSA layer 20 (PSA layer 20 side).

The resin film may have a single- or multilayer constitution. Preferably, the resin film has a multi-layer constitution with at least two layers. More preferably, the resin film has a tri-layer constitution. In examples shown in Figs. 1 and 2, resin film 10 has a tri-layer constitution consisting of a first layer 12, a second layer 13, and a third layer 11. The third layer 11 of the resin film 10 is placed on the PSA layer 20 side relative to the first layer 12, forming the PSA layer 20-side surface (or "front face" hereinafter) 10 A in the resin film 10. The first layer 12 is placed on the side of the back face 10B relative to the third layer 11, forming the back face 10B in the resin film 10. The back face 10B may form an outer surface of PSA film 1 when PSA film 1 is adhered to an adherend. The second layer 13 is placed between the first layer 12 and the third layer 11. It is noted that the resin film 10 is not limited to a tri-layer constitution. In view of providing each layer with a different property and the manufacturing, the number of layers is preferably 2 to 5. Thus, an additional layer may be formed between the third layer and the second layer or between the third layer and the second layer. An additional layer may be formed to the front face side relative to the third layer or on the back face side relative to the first layer. Such an additional layer may be provided for a release treatment purpose or to increase the tightness of adhesion, or it may be a layer formed of a printed material. Among these, the resin film preferably has a tri-layer constitution or a four-layer constitution, with a tri-layer constitution being particularly preferable.

Although not particularly limited, the layers constituting the resin film preferably exhibit a lightness L* of suitably 40 or higher (e.g., 45 or higher, typically 55 or higher) or preferably 60 or higher (e.g., 65 or higher, typically 70 or higher). This leads to increased whiteness of the outer surface of the PSA film, providing properties such as designability, surface printability, weathering resistance, and distinctiveness, for example. The surface printability referred to herein encompasses greater flexibility in printing on the outer surface achievable by increasing the whiteness by means of setting the lightness higher for the back face of the resin film placed on the outer surface side of the PSA film, thereby making the hue, etc., of the outer surface less influential to prints on the outer surface. In embodiments, the front face and the back face of the resin film may also differ in the lightness L*.

In the present description, the term "lightness" or "lightness L*" refers to the lightness L* specified by the L*a*b* color space based on the definition suggested by the International Commission on Illumination in 1976 or specified by JIS Z8729. In particular, lightness L* can be determined through measurements taken in accordance with the method described later in the worked examples, using a colorimeter (trade name "CR-400" available from Konica Minolta Holdings Inc.; chromameter). When the resin film has a multi-layer constitution consisting of three or more layers, the lightness L* of a layer placed intermediately (e.g., an second layer) can be measured in an exposed state obtainable by removing outer surface layers (e.g., the first layer and the second layer) by shaving or abrasion. Measurements can be taken with a colorimeter (trade name "CR-400" available from Konica Minolta Holdings Inc.; chromameter).

When the resin film has a multi-layer constitution consisting of three or more layers, typically a tri-layer constitution as shown in Fig. 1, each of the first layer 12, the second layer 13 and the third layer 11 shown in Fig. 1 can be a white layer, or a transparent layer while not particularly limited, as long as the overall appearance of the resin film is white. Here, the term "white layer" refers to a layer having a lightness $L^*$ of 65 or higher (e.g., 65 or higher, but 90 or lower, typically 70 or higher, but 85 or lower). The chromaticity values of white layers are not particularly limited while they may have a chromaticity $a^*$ defined by the $L^*a^*b^*$ color space in a range of $\pm15$ (e.g., -10 to 5, typically -8 to 2).

It is preferable that a layer (e.g., at least one layer among the first, second and third layers) constituting the resin film is opaque, or it is more preferable that all the layers constituting the resin film are opaque. Here, the term "opaque" may be understood to exclude being colorless and transparent. In embodiments, it can be understood as a concept that excludes being colored and transparent as well. As such, the laser absorbance tends to be set in a preferable range. It is noted that when the layers constituting the resin film are transparent, the cuttability of the resulting PSA film may decrease, whereby a high-quality cut may not be obtained. Because of this, the resin film preferably has a total light transmittance of 50 % or lower (e.g., 40 % or lower, in embodiments higher than 10 %). The resin film preferably has a haze of 80 % or higher (e.g., 90 % or higher, typically 95 % or higher). Methods for measuring the total light transmittance and the haze of a resin film are based on JIS K7361. As the system to measure the total light transmittance and haze, can be used "HM-150" available from Murakami Color Research Laboratory Co., Ltd.

As the present inventors have surprisingly found, the fiber laser cuttability and maximum cutting speed may be significantly improved by adjusting the laser beam absorbance, transmittance and reflectance (in the wavelength range of 1000 nm to 1100 nm) of the resin film within the PSA to specific ranges.

In particular, the resin film used in the present invention has a laser beam absorbance (A) in the wavelength range of 1000 nm to 1100 nm of at least 0%, the upper limit being lower than 55%, preferably 20% or lower, even more preferably 15% or lower in the wavelength range of 1000 nm to 1100 nm. Preferred ways of (A) are from 0 to 50, more preferably from 0 to 20, in embodiments from 1 to 15 or from 1 to 12.

In the present description, the term "laser beam absorbance" refers to a value determined by substituting transmittance T (%) and reflectance R (%) values measured with a spectrophotometer (e.g., spectrophotometer under model number "U-4100" available from Hitachi High-Technologies Corporation, measurement range 1000 to 1100 nm, conditions as outlined in the examples) into the following equation (I):

$$\text{Absorbance A (\%)} = 100 \text{ (\%)} - T \text{ (\%)} - R \text{ (\%)} \qquad (I)$$

The term "laser beam absorbance in a wavelength range of 1000 nm to 1100 nm" refers to the minimum laser beam absorbance (or "$A_{min}(1000,1100)$" hereinafter) in the said wavelength range.

The resin film used in the present invention has a laser beam transmittance in the wavelength range of 1000 nm to 1100 nm of more than 5%, preferably in the range of from 10% and 50%, more preferably in the range of from 20% and 45%, such as from 20 to 40% or 22 to 38%.

The resin film used in the present invention has a laser beam reflectance in the wavelength range of 1000 nm to 1100 nm of higher than 40%, preferably from 40 to 80%, more preferably from 50 to 70%, and in embodiments from 55 to 70% or from 58 to 68%.

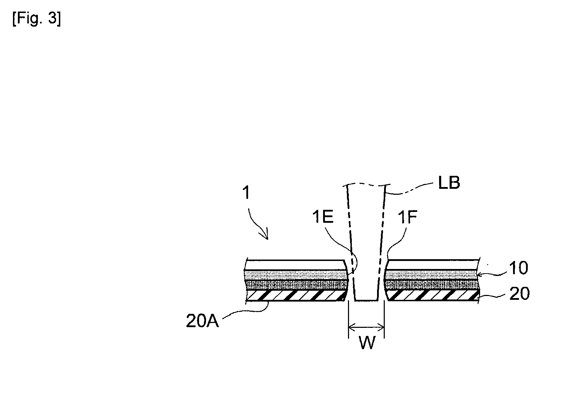

Cutting of the PSA film by the laser beam will be described with reference to the schematic diagram shown in Fig. 3. As shown in Fig. 3, when PSA film 1 comprising resin film 10 is adhered to an adherend and the prescribed laser beam LB is projected onto its back face, the resin film 10 absorbs the prescribed laser beam LB to be heated, PSA film 1 is allowed to effectively decompose and disappear to result in a cut. Thus, the PSA film 1 can be cut with a cut width (the width of a gap formed by the laser beam projection) W being accurately controlled in accordance with the irradiation breadth of the prescribed laser beam. In typical, as shown in fig. 3, PSA film 1 can be cut with a cut width W equal to or larger than the projection breadth (diameter) of the prescribed laser beam. A high-quality cut can be obtained with a cut edge surface 1 E and projection border 1 F both precisely shaped

In the art disclosed herein, the resin film can comprise, as a laser beam-absorbing agent, a single species or a suitable combination of some species among various materials capable of adjusting the $A_{min}(1000,1100)$ to the desired range. In particular, in the present description, the term "laser beam-absorbing agent" refers to a material capable of producing an effect to increase the laser beam absorbance $A_{min}(1000,1100)$ when compared to the corresponding resin film free of the laser beam-absorbing agent.

As the laser beam-absorbing agent, it is preferable to use one, two or more species selected from colorless or white-color-based laser beam-absorbing agents (or white-based absorbing agents, hereinafter). In view of the designability, surface printability and distinctiveness, it is desirable to use a white-based absorbing agent.

The term "white-colored base laser beam absorbing agent or non-black/white laser beam-absorbing agent" is employed herewith with the intension to designate absorbing agents, which are able to absorb light in wavelength range indicated above (also sometimes designated as NIR-absorbing agents), which are either colorless or white or at least do not interfere with the desired white color of the resin film to be employed in accordance with the present invention.

Examples of a white-based absorbing agent include calcium carbonate, silica, alumina, titanium oxide, talc, clay, aluminum silicate, basic lead carbonate, zinc oxide, strontium titanate, barium sulfate, calcium sulfate and so on. Among these, can be used one species solely or a combination of two or more species. In particular, calcium carbonate and silica are preferable. The white-based absorbing agent referred to herein is a component that can be understood as a white pigment used to whiten the resin film. In view of such a different purpose of use, the white-based absorbing agent in the present description may be defined to exclude titanium oxide, which is a typical white pigment. It can be defined to further exclude one, two or more species (typically three species, typically all species) among alumina, talc, clay, aluminum silicate, basic lead carbonate, zinc oxide, strontium titanate, barium sulfate, and calcium sulfate. When a white-based absorbing agent is added to the resin film (or a layer constituting the resin film) at 5 % by mass or more (or 10 % by mass or more), it may be understood as a white pigment. Although not particularly limited, the white-based absorbing agent may have an average particle diameter ($D_{50}$) of 0.01 $\mu$m to 5 $\mu$m (e.g., 0.02 $\mu$m to 3 $\mu$m, typically 0.05 $\mu$m to 2 $\mu$m).

Preferable examples of non-black/white laser beam-absorbing agents include metals and metal compounds. Examples of the metal include aluminum, titanium, nickel, zirconium, tungsten, iron, copper, silver, gold, zinc, molybdenum, chromium, as well as tin, alloys primarily comprising these metals, and so on. Examples of metal compounds include oxides, hydroxides, nitrides, carbides, etc., of the metals (while excluding white-based absorbing agents such as aluminum oxide, titanium oxide, etc.), as well as metal organic compounds containg metal ions selected among the matels shown above. These metals and metal compounds can be preferably used as laser beam-absorbing agents, typically in a powder form. Other examples of non-black/white laser beam-absorbing agents include organic compounds that absorb the prescribed laser beam. Examples of such organic compounds include quaterrylene-based compounds, perylene-based compounds, phthalocyanine-based compounds, cyanine-based compounds, aminium-based compounds, naphtalocyanine-based compounds, naphthoquinone-based compounds, diimonium-based compounds, anthraquinone-based compounds, aromatic dithiol-based metal complexes (e.g., nickel complexes) and so on. Among these, organic quaterrylene bisimides are preferable. Specific examples include "Lumogen IR 765" and "Lumogen IR 788" (all are trade names of BASF Corporation). These are preferable for having high transparency and thus being less likely to alter the hue and color tone of the resin film. Laser beam-absorbing agents comprising magnesium aluminum silicates are particularly preferred. A specific example thereof is "Lumogen IR 1050" (BASF). It is preferable that the non-black/white laser beam-absorbing agent has an average particle diameter ($D_{50}$) of 0.01 $\mu$m or larger, but 20 $\mu$m or smaller (e.g., 0.1 $\mu$m or larger, but 10 $\mu$m or smaller, typically 1 $\mu$m or larger, but 5 $\mu$m or smaller).

The laser beam-absorbing agent content in the resin film can be, for instance, 0.01 % by mass or greater, or preferably 0.05 % by mass or greater (e.g., 0.07 % by mass or greater). Too high a laser beam-absorbing agent content may be likely to result in a prominent laser-cut residue. Thus, usually, the upper limit of the white-based absorbing agent content is preferably 20 % by mass or lower (e.g., 15 % by mass or lower, typically 12 % by mass or lower), or may be lower than 10 % by mass (typically lower than 5 % by mass).

Particularly preferred are inorganic laser beam absorbing agents or hybrid inorganic-organic laser beam absorbing agents, which preferably are based on materials containing silica, alumina, aluminum hydroxides, inorganic magnesium compounds as well as combinations thereof. In order to achieve satisfactory cutting properties as well as satisfactory overall appearance, it is preferred to include into the white resin film (in one or more layers should a multilayer constitution be selected) a combination of titanium oxide and a further laser beam absorbing agent selected among silica, aluminum hydroxide and magnesium aluminum silicates in order to achieve a good balance of appearance and laser cuttability.

When the resin film has a constitution consisting of at least two layers, it is preferable that each layer contains the laser beam-absorbing agent described above. In a preferable embodiment, each of the first layer and the second layer (and any further layer) comprises a laser beam-absorbing agent. The first layer and the second layer may comprise different laser beam-absorbing agents. It is preferable to add "Lumogen IR 765", "LumogenIR 788" or "LumogenIR 1050" listed earlier as a laser beam-absorbing agent in addition to a white-based absorbing agent. Each layer may further contain a non-black/white laser beam-absorbing agent. The laser beam-absorbing agent content in each layer can be at the same level as the laser beam-absorbing agent content in the resin film described earlier. It is noted that not all layers constituting the multi-layer resin film necessarily contain a laser beam-absorbing agent. It is preferable that among the respective layers in the resin film, at least the layer placed on the PSA layer side (typically the third layer) contains a laser beam-absorbing agent. Three-layer configurations, wherein two layers contain a laser beam-absorbing agent allow for a higher maximum laser cutting speed and are therefore more preferable. Even more preferable in this regard are configurations, wherein all layers of the multilayer film comprise a laser beam-absorbing agent.

Black-based absorbing agents such as carbon blacks tend to induce discoloration on and near the cutting edge after short-wavelength laser machining. Therefore, in a preferred embodiment of the present invention, the content of black-based absorbing agents (including in particular carbon black) is less than 0.01% by mass based on the resin film, more preferably less than 0.001% by mass. In a further preferred embodiment, the layers constituting the resin film do not contain black-based absorbing agents, in particular carbon black.

Examples of a material that can be used as a resin component constituting the resin film include polyolefin resins such as polyethylene, polypropylene, ethylene-propylene copolymers, polypropylene-polyethylene blend resins, etc.; polyester resins such as polyethylene terephthalate, polybutylene terephthalate, etc., as well as vinyl chloride resins, vinyl acetate resins, polyamide resins and so on. A resin film can be formed by typically molding a material into a film, with the material being a resin composition prepared by adding a laser beam-absorbing agent to such a resin material. The molding method is not particularly limited, and can be suitably employed a heretofore known extrusion method (e.g., an inflation extrusion method, a T-die extrusion method), casting method, and like methods. When the resin film comprises at least two layers (typically two or more resin layers), a resin film comprising multiple resin layers can be obtained by employing a single method or a suitable combination of methods among a method where resin compositions corresponding to the respective resin layers are molded simultaneously (e.g., by a multi-layer inflation method or a multi-layer T-die method), a method where the respective layers are individually molded and then adhered to each other, a method where a layer is casted on top of another pre-formed layer, and other like methods. The resin components constituting the respective resin layers can be suitably selected from the species listed earlier. The resin components in the respective resin layers may be the same or different from one another.

The resin film (or a layer constituting the resin film) may contain a colorant such as pigments, dyes, or the like. Preferable examples of the colorant include white-based colorants. The first layer preferably comprises a known white-based colorant (particularly preferably a white pigment). Examples of a white-based colorant include inorganic colorants such as titanium oxide, etc.; organic colorants such as acrylic resin particles, etc.; and the like. Among these colorants, can be used a single species solely or a combination of two or more species.

The colorant content is not particularly limited and can be in a known range. For instance, it can be 0.1 to 30 % by mass, or preferably 0.1 to 25 % by mass (typically 0.1 to 20 % by mass) of the resin film. When the layers (e.g., the first layer and/or the second layer, particularly preferably the first layer) constituting the resin film comprise a white-based colorant (typically a white pigment), its content is suitably 5 % by mass or greater, or it can be 6 % by mass or greater (e.g., 7 % by mass or greater). Although not particularly limited, the upper limit of the white-based colorant (typically a white pigment) content is suitably 20 % by mass or lower, or it can be 15 % by mass or lower.

The resin film may comprise optional additives as necessary. Examples of such additives include fire-retardants, anti-static agents, photostabilizing agents (radical scavengers, ultraviolet ray-absorbing agents, etc.), antioxidants, and the like.

The resin film may be printed on the back face. In such a case, by increasing the whiteness of the back face of the resin film, the flexibility in printing thereon increases and good prints can be produced. The printing method is not particularly limited, and can be suitably employed a method among various known or commonly used methods such as offset printing, silk screen printing, typography, flexography, gravure printing and so on.

A surface of the resin film may be subjected as necessary to a treatment to increase the adhesion to an adjacently-placed material. Examples of a treatment to increase the adhesion include corona discharge treatment, acid treatment, ultraviolet ray irradiation, plasma treatment, primer coating, and so on. Such a surface treatment can be preferably applied to either the front face or the back face of the resin film. When the resin film is printed on a surface thereof, after subjected to a surface treatment (e.g., corona discharge treatment) described above, the resin film can be printed on the surface and subjected to a release treatment described below.

At least one surface (the front face and/or the back face, preferably the back face) of the resin film may be subjected to a suitable surface treatment to increase the release. In a resin film subjected to such a surface treatment, at least one surface may be made to be a release face. A resin film having the surface pre-subjected to a release treatment (typically a resin film provided with a release layer produced via a treatment with a release agent) can be preferably used. A known or commonly used release agent can be used to form the release layer. Examples of such a release agent include silicone-based release agents and non-silicone-based release agents. As a non-silicone-based release agent, can be used a fluorine-based or a long chain alkyl-based release agent. A release agent can be a condensation product such as a polyamide, etc., or an addition polymer-based release agent. Another preferable example of a release agent in a wax material, known to the skilled person as release agent. For a resin film formed of a less adhesive material including a less polar polymer, etc., such as polyolefin resins or the like, a surface of the film can be used as a release face without any particular release treatment. Alternatively, a surface of the resin film formed of a less adhesive material may be subjected further to a release treatment. The release treatment method (typically a method for applying a release agent) is not particularly limited, and a heretofore known application means can be suitably employed. A release treatment (typically formation of a release layer) as described above may be given to a resin film in advance, or it can be carried out during a course of procedure to provide a PSA layer on the resin film and winding the resultant, for instance, before or after providing the PSA layer, but before the winding. With respect to a release liner-covered PSA film comprising a release liner, the release treatment can be applied to the release liner.

It is usually suitable that the resin film has a thickness of about 10 μm to 150 μm. When it is much thinner than 10 μm or much thicker than 150 μm, the handling properties of the resin film or of a PSA film comprising the resin film may be likely to decrease. In a preferable embodiment, the resin film has a thickness of 20 μm to 110 μm (more preferably 40 μm to 100 μm). When the resin film has at least two layers, each layer may independently have a thickness of 3 μm or larger (e.g., 5 μm or larger, typically 10 μm or larger). The thickness of each layer may be independently 70 μm or smaller (e.g., 50 μm or smaller, typically 40 μm or smaller).

When the resin film has a multi-layer constitution consisting of two or more layers, it is suitable that each of the first layer and the third layer independently accounts for 10 % or more (e.g., 30 % or more, typically 50 % or more) of the thickness of the entire resin film while each may account for 90 % or less (e.g., 70 % or less, typically 50 % or less). When a second layer is further placed, it is suitable that each of the first layer, the third layer and the second layer independently accounts for 10 % or more (e.g., 15 % or more, typically 30 % or more) of the thickness of the entire resin film, while each may account for 50 % or less (e.g., 40 % or less, typically 35 % or less). It is noted that the thicknesses of the first, second, and third layers if any are suitably selected within ranges so that their total does not exceed 100 %. When the resin film has a bi-layer or a tri-layer constitution, the thicknesses of the respective layers constituting the resin film are selected so as to be totaled to 100 %.

In the art disclosed herein, the PSA constituting the PSA layer is not particularly limited. For instance, can be used a known rubber-based PSA, acrylic PSA, polyester-based PSA, polyurethane-based PSA, silicone-based PSA, or the like. From the standpoint of the adhesive performance and the cost, can be preferably used a rubber-based PSA or an acrylic PSA. Rubber-based PSA exhibit an excellent adhesive quality in both fiber and $CO_2$ laser cutting processes after automatic lamination and are therefore even more preferable. The PSA layer may have a mono-layer constitution, or a laminate constitution consisting of two or more layers of different compositions.

Examples of a rubber-based PSA include natural rubber-based PSA, synthetic rubber-based PSA and the like. Examples of a rubber-based polymer as the base polymer of a synthetic rubber-based PSA include polybutadiene, polyisoprene, butyl rubber, polyisobutylene, styrene-based elastomers such as styrene-butadiene-styrene block copolymers, styrene-ethylene/butylene-styrene block copolymers, styrene-ethylene/butylene random copolymers, etc., and others such as ethylene propylene rubber, propylene butane rubber, ethylene propylene butane rubber, and the like.

A preferable acrylic PSA comprises as a base polymer (a primary component among polymer components), for instance, an acrylic polymer having a monomer composition comprising primarily an alkyl (meth)acrylate such as butyl (meth)acrylate, 2-ethylhexyl (meth)acrylate, etc., and further comprising as necessary a modifying monomer copolymerizable with the alkyl (meth)acrylate. Examples of the modifying monomer include hydroxyl group-containing monomers such as 2-hydroxylethyl (meth)acrylate, etc.; carboxyl group-containing monomers such as (meth)acrylic acid, etc.; styrene-based monomers such as styrene, etc.; vinyl esters such as vinyl acetate, etc.; and the like. Such an acrylic PSA can be obtained by a commonly used polymerization method such as a solution polymerization method, an emulsion polymerization method, an ultraviolet ray (UV) polymerization method, or the like.

The PSA layer may contain a laser beam-absorbing agent. In a PSA layer consisting of multiple layers, at least one layer among them can contain a laser beam-absorbing agent. For the laser beam-absorbing agent to be contained in the PSA layer, can be suitably selected one, two or more species among the laser beam-absorbing agents listed earlier. The laser beam-absorbing agent content in the PSA layer is suitably 5 % by mass or less, or preferably 3 % by mass or less (e.g., 1 % by mass or less). Too high a laser beam-absorbing agent content may result in degraded adhesive performance. The art disclosed herein can be practiced preferably in an embodiment where the PSA layer is essentially free of a laser beam-absorbing agent.

The PSA layer can contain optional additives as necessary. Examples of such additives include crosslinking agents, tackifiers, softening agents, fire retardants, anti-static agents, colorants (pigments, dyes, etc.), photostabilizing agents (radical scavengers, UV-absorbing agents, etc.), antioxidants, and so on.

The thickness of the PSA layer can be suitably selected so that adhesive performance suitable to the application of the PSA film can be obtained. Usually, the PSA layer has a thickness of suitably 0.5 μm to 50 μm or preferably 1 μm to 30 μm (e.g., 2 μm to 20 μm), and in ambodiments from 5 to 15 μm, such as 10 μm.

The method for providing a PSA layer on the resin film is not particularly limited. For example, can be suitably employed a known method such as a method where a solution or a dispersion containing PSA layer-forming components dissolved in an organic solvent or dispersed in an aqueous solvent is applied to the resin film and allowed to dry to directly form a PSA layer on the resin film surface, a method where a PSA layer pre-formed on a release surface is transferred to the resin film, a method where a PSA layer-forming composition and a resin film-forming composition are co-extruded (extruded in multiple layers), or the like method.

The PSA film disclosed herein is preferably used as a PSA film (PSA film for laser cutting) that is used in an application involving cutting with a laser beam (a prescribed laser beam) having a center wavelength of 1000 nm to 1100 nm. The PSA film may be cut with the prescribed laser beam either before or after its adhesion to an adherend. Examples of an embodiment where the PSA film is cut with the prescribed laser beam before its adhesion to an adherend include an embodiment as shown in Fig. 2 in which while a surface of PSA layer 20 is being protected with release liner 30, a prescribed laser beam is projected onto the back face (back face 10B of resin film 10) of PSA film 1 to cut just the PSA film 1 while leaving release liner 30 as is, and an embodiment in which PSA film 1 is cut along with release liner 30. The PSA film cut into a desirable shape can be subsequently adhered to any adherend to serve a purpose such as surface protection, decoration, or labeling of the adherend, bonding to another adherend, etc. As an embodiment where the PSA film is cut with the prescribed laser beam after its adhesion to an adherend, can be cited an embodiment in which the PSA film is adhered to a surface of a work piece and the prescribed laser beam is projected onto the back face of the PSA film to carry out a laser machining (cutting, hole-making, shaving, etc.) of the work piece. In such an embodiment, the PSA film may be able to function as a protection film to protect a surface of the work piece before, after or during the laser machining.

As outlined above, the PSA film in accordance with the present invention, however, is also suitable to be used as a surface protecting film during cutting with a laser beam employing a carbon dioxide laser (with a center wavelength of about 9.3 $\mu$m to 10.6 $\mu$m) as it surprisingly has been found that the pressure-sensitive adhesive films in accordance with the present invention are able to be employed during laser cutting processes involving fiber layers as well as carbon dioxide lasers. Furthermore, as indicated above, in the absence of any black colorants/black absorbents, the film in accordance with the present invention in particular is a able to provide improved surface protection, preventing discoloration and black residues on ad near the cutting edge, as well as on the remaining metal surface, thereby reducing the need for post-cutting cleaning operations.

The total thickness of the PSA film according to the present invention is preferably 50 to 150 $\mu$m, more preferably between 60 and 100 $\mu$m, especially preferably between 70 and 90 $\mu$m, as may be determined in accordance with EN 1942.

Depending on the roughness of the substrate surface and on the complexity of the shape, the adhesion of the PSA film on BA steel is set to be preferably 100 cN/20 mm or more, such as from 100 to 500 cN/20 mm, more preferably 140 cN/20 mm or more. For the application on rough metal surfaces, an adhesion on BA steel of 250 cN/20 mm or more is preferable, such as 300 cN/20 mm or more. The adhesion on BA steel may be determined in accordance with EN 1939.

The weatherability of the PSA film on BA steel as measured in accordance with ISO 4892-2 is preferably more than 15h, preferably more than 20 h.

The tensile strength in machine direction (MD) of the PSA film is preferably at least 10 N/20 mm, more preferably at least 15 N/20 mm, especially preferably at least 20 N/ 20 mm. The tensile strength (MD) is determined in accordance with EN 14410.

Although not particularly limited, the PSA film exhibits an elongation (MD), , of at least 100, preferably at least 120%, especially preferably at least 150 cN/20 mm, which may be determined in accordance with EN 14419.


EXAMPLES

Several working examples relating to the present invention are described below for illustration purposes. In the description below, "parts" and "%" are based on the mass unless otherwise specified.

<Example 1>

A PSA film 1 having the same constitution as shown in Fig. 1 was fabricated as described below. In particular, materials shown in Table 1 were co-extruded at a die temperature of 165 °C using a 3-layer co-extrusion film inflation machine (inflation method) to fabricate a tri-layer resin film 10 having a total thickness of 75 $\mu$m. Table 1 shows the respective compositions and thickness of the first layer 12, the second layer 13, and the third layer 11 constituting this resin film 10.

The abbreviations found in Tables 1 and 2 will be explained in the following:

PO: polyolefin

PE: polyethylene

WH A: White masterbatch composed of 60% by weight of titanium dioxide ($TiO_2$) and a polyolefin (PO) carrier material

ABS A: Absorber masterbatch containing commercially available absorbing material BASF Lumogen IR 1050 and a polyolefin (PO) carrier material.

ABS B: Absorber masterbatch containing commercially available absorbing material LM PE 6550 (Polyone) and a polyolefin (PO) carrier material.

ABS C: Absorber masterbatch containing commercially available absorbing material 145463 WT (Polyone) and a polyolefin (PO) carrier material.

ABS D: Absorber masterbatch containing commercially available absorbing material Argutec Laser 19LD (Argus) and a polyolefin (PO) carrier material.

ABS E: Absorber masterbatch containing commercially available absorbing material Polybatch IR1515 (Schulmann) and a polyolefin (PO) carrier material.

ABS F: Absorber masterbatch containing commercially available absorbing material Maxithen HP751237LS (Gabriel Chemie) and a polyolefin (PO) carrier material.

A first face (the surface on the third layer 11 side) of the fabricated resin film was subjected to a corona discharge treatment. The PSA composition described below was applied to the corona discharge-treated surface and was allowed to dry to form a layer of 10 $\mu$m thickness after dried. A PSA film 1 having a natural rubber-based PSA layer 20 on a first face of a substrate was thus obtained. In this PSA film 1, the first layer 12, the second layer 13 and the third layer 11 of the resin film 10 were all white layers, with a PSA layer 20 being provided on the side of the third layer 11.

(PSA composition)

To 100 parts of a natural rubber, were added and mixed 70 parts of a tackifier (trade name "QUINTONE A100" available from Zeon Corporation), 2 parts of an anti-aging agent (trade name "NOCRAC NS-5" available from Ouchi Shinko Chemical Industrial Co., Ltd.), 3 parts of an isocyanate-based crosslinking agent (trade name "CORONATE L" available from Nippon Polyurethane Industry Co., Ltd.) and toluene to obtain a natural rubber-based PSA.

<Example 2>

The resin film according to Example 2 was fabricated in the same manner as Example 1 except that the composition was modified so as to increase the content of the polyolefin fractions at the expense of absorber material ABS A as shown in Table 1. Using this fabricated resin film, an all-white PSA film according to Example 2 was obtained in the same manner as Example 1.

<Examples 3 and 4>

The resin films according to Examples 3 and 4 were fabricated in the same manner as Example 1 except that the film layer thickness has been varied as shown in Table 1. Using these fabricated resin films, the all-white PSA films according to Examples 3 and 4 was obtained in the same manner as Example 1.

<Examples 5 to 10>

The resin films according to Examples 5 to 10 were fabricated in the same manner as Example 1 except that the compositions and thickness of the first, intermediate and second layers were modified so that absorber material ABS A has only been added to two of the three layers constituting the resin film, as is shown in Table 1. Using these fabricated resin films, PSA films according to Examples 5 to 10 was obtained in the same manner as Example 1. In these PSA films, the first, second and third layers were white.

<Examples 11 to 14>

Resin films according to Examples 11 to 14 were fabricated in the same manner as Example 1 except that different absorber master batches ABS B, ABS C, ABS D and ABS F have been used instead of ABS A. Using these fabricated resin films, respectively, PSA films according to Examples 11 to 14 were obtained in the same manner as Example 1. In these PSA films, the first, second and third layers were white.

<Comparative Example 1>

The resin film according to Comparative Example 1 was fabricated in the same manner as Example 6 except that for the composition for the second and third layer, an UV-stabilizer master batch was used in contents of 1 and 1.5 % by mass, respectively, instead of ABS A. Using this fabricated resin film, an all-white PSA film according to Comparative Example 1 was obtained in the same manner as Example 6.

<Comparative Example 2>

The resin film according to Comparative Example 1 was fabricated in the same manner as Example 1 except that the composition was modified so as to increase the content of the polyolefin fractions at the expense of absorber material ABS A as shown in Table 2. Using this fabricated resin film, an all-white PSA film according to Comparative Example 2 was obtained in the same manner as Example 1.

<Comparative Examples 3 and 4>

The resin films according to Comparative Examples 3 and 4 were fabricated in the same manner as Examples 1 and 2 except that absorber master batches ABS E has been used instead of ABS A. Using these fabricated resin films, all-white PSA films according to Comparative Examples 3 and 4 were obtained in the same manner as Examples 1 and 2.

<Comparative Example 5>

The resin film according to Comparative Example 5 was fabricated in the same manner as Example 2 except that the composition was modified so as to increase the content of the polyolefin fractions at the expense of white master batch WH A as shown in Table 2. Using this fabricated resin film, a transparent PSA film according to Comparative Example 5 was obtained in the same manner as Example 1.

[Evaluations]

Samples of appropriate dimensions were cut out from the PSA films and resin films fabricated according to the respective examples above and subjected to the following evaluations.

(1) Transmittance

Measurement system: spectrophotometer under model number "U-4100" available from Hitachi High-Technologies Corporation

Measurement conditions: measurement mode-applied detection, % T (transmittance) data mode, 750 nm/min scan rate, 1 nm sampling interval, automated slit control, photomultiplier voltage automated at 1, intensity control mode fixed, high resolution measurement OFF, no dimming film used, PbS sensitivity at 1, 10 mm cell length.

Measurement method:

(i). The measurement system was turned on and kept in standby for 2 hours or longer to stabilize the system. Subsequently, without any sample set in, the baseline was measured.

(ii). A sample was then set in the transmittance measuring region of the measurement system, and under the measurement conditions shown above, the transmittance in a wavelength range of 1000 nm to 1100 nm was measured.

(2) Reflectance

Measurement system: spectrophotometer under model number "U-4100" available from Hitachi High-Technologies Corporation

Measurement conditions: measurement mode-applied detection, % R (reflectance) data mode, 750 nm/min scan rate, 1 nm sampling interval, automated slit control, photomultiplier voltage automated at 1, intensity control mode fixed, high resolution measurement OFF, no dimming film used, PbS sensitivity at 1, 10 mm cell length.

Measurement method:

(i). The measurement system was turned on and kept in standby for two hours or longer to stabilize the system. Subsequently, a standard white plate was set in the reflectance measuring region (with no sample set) and the baseline was measured.

(ii). A sample was then set in the reflectance measuring region. Here, in order to prevent reflection of the light that had transmitted through the sample, a resin plate under trade name "CLAREX (registered trademark)" (black-colored, 1 mm thick) available from Nitto Jushi Kogyo Co., LTD. was placed opposite to the surface on which the light entered. Under the measurement conditions shown above, the reflectance in the wavelength range of 1000 nm to 1100 nm was measured.

(3) Absorbance

Substituting the transmittance T (%) and reflectance R (%) values into the next equation: 100 (%) - T (%) - R (%), the minimum absorbance in the 1000 nm to 1100 nm wavelength range, $A_{min}$ (1000, 1100), was determined. The results are shown in Tables 1 to 2 along with the values of transmittance $T(A_{min})$ and reflectance $R(A_{min})$ at the wavelength of the minimum absorbance.

(4) Laser cutting

Each sample (a PSA film adhered on a 1 mm thick SUS304 2B plate or a resin film with the edges being fastened with PSA tape) was set on the work support of a laser welder and a laser beam was projected onto a prescribed cut line under the following conditions:

Laser used: Rofin Sinar FL020 Fiber Laser; LVD Electra FL-3015 Fiber Laser Cutting System (1 $\mu$m wavelength, 2 kW output)

The evaluation results of the laser cutting are shown in Tables 1 and 2.

**Table 1**

| | | Composition (%) | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 |
|---|---|---|---|---|---|---|---|---|---|---|---|---|---|---|---|---|
| Film | First layer | PE | 82 | 85 | 85 | 85 | 85 | 88 | 85 | 82 | 88 | 82 | 82 | 82 | 82 | 82 |
| | | WH A (60% $TiO_2$ + PO) | 12 | 12 | 12 | 12 | 12 | 12 | 12 | 12 | 12 | 12 | 12 | 12 | 12 | 12 |
| | | ABS A (Lumogen IR 1050) | 6 | 3 | 3 | 3 | 3 | - | 3 | 6 | - | 6 | - | - | - | - |
| | | ABS B (Polyone LM PE 6550) | - | - | - | - | - | - | - | - | - | - | 6 | - | - | - |
| | | ABS C (Polyone 145463 WT) | - | - | - | - | - | - | - | - | - | - | - | 6 | - | - |
| | | ABS D (Argus Argutec Laser 19LD) | - | - | - | - | - | - | - | - | - | - | - | - | 6 | - |
| | | ABS E (Schulmann Polybatch IR1515) | - | - | - | - | - | - | - | - | - | - | - | - | - | - |
| | | ABS F (Gabriel Chemie Maxithen HP751237LS) | - | - | - | - | - | - | - | - | - | - | - | - | - | 6 |
| | | UV-Stabilizer | - | - | - | - | - | - | - | - | - | - | - | - | - | - |
| | Second layer | PE | 82 | 85 | 85 | 85 | 85 | 85 | 88 | 82 | 82 | 88 | 82 | 82 | 82 | 82 |
| | | WH A (60% $TiO_2$ + PO) | 12 | 12 | 12 | 12 | 12 | 12 | 12 | 12 | 12 | 12 | 12 | 12 | 12 | 12 |
| | | ABS A (Lumogen IR 1050 + PO) | 6 | 3 | 3 | 3 | 3 | 3 | - | 6 | 6 | - | - | - | - | - |
| | | ABS B (Polyone LM PE 6550) | - | - | - | - | - | - | - | - | - | - | 6 | - | - | - |
| | | ABS C (Polyone 145463 WT) | - | - | - | - | - | - | - | - | - | - | - | 6 | - | - |
| | | ABS D (Argus Argutec Laser 19LD) | - | - | - | - | - | - | - | - | - | - | - | - | 6 | - |
| | | ABS E (Schulmann Polybatch IR1515) | - | - | - | - | - | - | - | - | - | - | - | - | - | - |
| | | ABS F (Gabriel Chemie Maxithen HP751237LS) | - | - | - | - | - | - | - | - | - | - | - | - | - | - |
| | | UV-Stabilizer | - | - | - | - | - | - | - | - | - | - | - | - | - | - |

EP 3 012 288 A1

(continued)

| | | Composition (%) | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 |
|---|---|---|---|---|---|---|---|---|---|---|---|---|---|---|---|---|
| | | PE | 82 | 85 | 85 | 85 | 88 | 85 | 85 | 88 | 82 | 82 | 82 | 82 | 82 | 82 |
| | | WH A (60% $TiO_2$ + PO) | 12 | 12 | 12 | 12 | 12 | 12 | 12 | 12 | 12 | 12 | 12 | 12 | 12 | 12 |
| | | ABS A (Lumogen IR 1050 + PO) | 6 | 3 | 6 | 3 | - | 3 | 3 | - | 6 | 6 | - | - | - | - |
| | | ABS B (Polyone LM PE 6550) | - | - | - | - | - | - | - | - | - | - | 6 | - | - | - |
| | Third layer | ABS C (Polyone 145463 WT) | - | - | - | - | - | - | - | - | - | - | - | 6 | - | - |
| | | ABS D (Argus Argutec Laser 19LD) | - | - | - | - | - | - | - | - | - | - | - | - | 6 | - |
| | | ABS E (Schulmann Polybatch IR1515) | - | - | - | - | - | - | - | - | - | - | - | - | - | - |
| | | ABS F (Gabriel Chemie Maxithen HP751237LS) | - | - | - | - | - | - | - | - | - | - | - | - | - | 6 |
| | | UV-Stabilizer | - | - | - | - | - | - | - | - | - | - | - | - | - | - |
| Total Film Thickness ($\mu$m) | | | 75 | 75 | 70 | 65 | 75 | 75 | 75 | 75 | 75 | 75 | 75 | 75 | 75 | 75 |
| Absorbance (%) | | | 5 | 0 | n.m. | n.m. | n.m. | n.m. | n.m. | n.m. | n.m. | n.m. | 5 | 12 | 3 | 5 |
| Transmittance (%) | | | 33 | 34 | n.m. | n.m. | n.m. | n.m. | n.m. | n.m. | n.m. | n.m. | 36 | 25 | 38 | 34 |
| Reflectance (%) | | | 62 | 66 | n.m. | n.m. | n.m. | n.m. | n.m. | n.m. | n.m. | n.m. | 59 | 63 | 59 | 61 |
| Cuttability with Fiber Laser | | | yes | yes | yes | yes | yes | yes | yes | yes | yes | yes | yes | yes | yes | yes |
| Maximum cutting speed (m/min) | | | 22 | 18 | 18 | 20 | 18 | 18 | 16 | 18 | 20 | 20 | 18 | 18 | 18 | 18 |

*n.m. = not mentioned, tests revealed values within the range claimed for the present invention

EP 3 012 288 A1

13

**Table 2**

| | | Composition (%) | Comp. Ex. 1 | Comp. Ex. 2 | Comp. Ex. 3 | Comp. Ex. 4 | Comp. Ex. 5 |
|---|---|---|---|---|---|---|---|
| Film | First layer | PE | 88 | 88 | 82 | 85 | 97 |
| | | WH A (60% $TiO_2$ + PO) | 12 | 12 | 12 | 12 | - |
| | | ABS A (Lumogen IR 1050) | - | - | - | - | 3 |
| | | ABS B (Polyone LM PE 6550) | - | - | - | - | - |
| | | ABS C (Polyone 145463 WT) | - | - | - | - | - |
| | | ABS D (Argus Argutec Laser 19LD) | - | - | - | - | - |
| | | ABS E (Schulmann Polybatch IR1515) | - | - | 6 | - | - |
| | | ABS F (Gabriel Chemie Maxithen HP751237LS) | - | - | - | - | - |
| | | UV-Stabilizer | - | - | - | - | - |
| | Second layer | PE | 87 | 88 | 82 | 85 | 97 |
| | | WH A (60% $TiO_2$ + PO) | 12 | 12 | 12 | 12 | - |
| | | ABS A (Lumogen IR 1050) | - | - | - | - | 3 |
| | | ABS B (Polyone LM PE 6550) | - | - | - | - | - |
| | | ABS C (Polyone 145463 WT) | - | - | - | - | - |
| | | ABS D (Argus Argutec Laser 19LD) | - | - | 6 | - | - |
| | | ABS E (Schulmann Polybatch IR1515) | - | - | - | - | - |
| | | ABS F (Gabriel Chemie Maxithen HP751237LS) | - | - | - | - | - |
| | | UV-Stabilizer | 1 | - | - | - | - |
| | Third layer | PE | 86.5 | 88 | 82 | 85 | 97 |
| | | WH A (60% $TiO_2$ + PO) | 12 | 12 | 12 | 12 | - |
| | | ABS A (Lumogen IR 1050) | - | - | - | - | 3 |
| | | ABS B (Polyone LM PE 6550) | - | - | - | - | - |
| | | ABS C (Polyone 145463 WT) | - | - | - | - | - |
| | | ABS D (Argus Argutec Laser 19LD) | - | - | 6 3 | - | - |
| | | ABS E (Schulmann Polybatch IR1515) | - | - | - | - | - |
| | | ABS F (Gabriel Chemie Maxithen HP751237LS) | - | - | - | - | - |
| | | UV-Stabilizer | 1.5 | - | - | - | - |
| Total Film Thickness ($\mu$m) | | | 75 | 75 | 75 | 75 | 75 |

(continued)

| Composition (%) | Comp. Ex. 1 | Comp. Ex. 2 | Comp. Ex. 3 | Comp. Ex. 4 | Comp. Ex. 5 |
|---|---|---|---|---|---|
| Absorbance (%) | -3 | -2 | -3 | -2 | 9 |
| Transmittance (%) | 31 | 34 | 38 | 31 | 90 |
| Reflectance (%) | 72 | 69 | 65 | 71 | 1 |
| Cuttability with Fiber Laser | no | no | no | no | no |
| Maximum cutting speed (m/min) | - | - | - | - | |

As is shown by means of the exemplary PSA films, white surface protection films having an excellent fiber laser cuttability may be provided. In contrast, Comparative Examples 1 to 4 exhibit a poor fiber laser cuttability due to their absorbance/transmittance/reflectance properties being outside the range as defined by the present invention. The results for the samples in accordance with the invention were further confirmed by tests using different types of steel sheet materials as well as other sheet thicknesses, such as 2mm or higher, in each turn confirming good cutting properties.

INDUSTRIAL APPLICABILITY

The PSA films according to the present invention are used as surface protection tapes in fiber and $CO_2$ laser cutting processes. The present invention provides pressure-sensitive adhesive films with a favourable visual appearance and surface printability without discoloration and burrs on the cutting edge and without black residues/discoloration on the remaining metal sheet after short-wavelength laser machining. At the same time, the PSA films of the present invention exhibit a favourable cuttability, allowing for suitable fiber laser cutting speeds. Since the use of the PSA films of the present invention as surface protecting films does not require extensive cleaning and polishing operations after the cutting process and the cutting process itself may be accelerated, the efficiency of laser machining methods may be improved.

[Reference Signs List]

1: PSA film

10: resin film

11: a first layer

12: a second layer

13: an intermediate layer

20: PSA layer

30: release liner

LB: laser beam

W: cut width

**Claims**

1. A pressure-sensitive adhesive film comprising a white resin film as a substrate and a pressure-sensitive adhesive layer provided at least on a face of the resin film, wherein:

the resin film has a laser beam absorbance in the wavelength range of 1000 nm to 1100 nm of at least 0% and lower than 55%, a laser beam transmittance in the wavelength range of 1000 nm to 1100 nm of more than 5%, and a laser beam reflectance in the wavelength range of 1000 nm to 1100 nm of higher than 40%.

2. The pressure-sensitive adhesive film according to claim 1, wherein the resin film has a multilayer-constitution.

3. The pressure-sensitive adhesive film according to claim 1 or 2, wherein the resin film is constituted of three layers.

4. The pressure-sensitive adhesive film according to any one of claims 1 to 3, wherein each layer constituting the resin film comprises a polyolefin resin.

5. The pressure-sensitive adhesive film according to any one of claims 1 to 4, wherein each layer constituting the resin film has a lightness L* of 40 or higher, L* being specified by JIS Z8729.

6. The pressure-sensitive adhesive film according to any one of claims 1 to 5, wherein the content of carbon black in the resin film is less than 0.01% by mass based on the resin film.

7. The pressure-sensitive adhesive film according to any one of claims 1 to 6, wherein the resin film contains $TiO_2$ in a content of 5 % by mass or more based on the resin film.

8. Use of the pressure-sensitive adhesive film according to any one of claims 1 to 7 as surface protective film in an application involving cutting with a laser beam having a center wavelength of 1000 nm to 1100 nm.

[Fig. 1]

[Fig. 2]

[Fig. 3]

**EUROPEAN SEARCH REPORT**

Application Number

EP 14 00 3586

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 679 332 A1 (NITTO DENKO CORP [JP]; NITTO EUROPE NV [BE]) 1 January 2014 (2014-01-01) * abstract * * paragraph [0022] - paragraphs [0025], [0028], [0032], [0033]; claims; example 11; table 1 * ----- | 1-8 | INV. C08K5/00 C08K3/00 C09J7/02 B32B27/32 |
| X | EP 2 722 376 A1 (NITTO DENKO CORP [JP]) 23 April 2014 (2014-04-23) * abstract * * paragraphs [0023], [0028]; claims; examples 11,15; table 1 * ----- | 1-8 | |
| X | EP 2 722 375 A1 (NITTO DENKO CORP [JP]) 23 April 2014 (2014-04-23) * abstract * * claims 1,2; example 13; table 1 * ----- | 1-6,8 | |
| X | US 2012/291845 A1 (FUJIFILM CORP [JP]; HATAKEYAMA AKIRA [JP]; ODA TOSHIHIRO [JP]) 22 November 2012 (2012-11-22) * abstract * * paragraphs [0036], [0067]; claims 1-3,6,8 * ----- | 1-7 | TECHNICAL FIELDS SEARCHED (IPC) C09J C08K B32B |

The present search report has been drawn up for all claims

| Place of search | Date of completion of the search | Examiner |
|---|---|---|
| Munich | 15 April 2015 | Meier, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 00 3586

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2015

| Patent document cited in search report | | Publication date | Patent family member(s) | | Publication date |
|---|---|---|---|---|---|
| EP 2679332 | A1 | 01-01-2014 | CA | 2820680 A1 | 25-12-2013 |
| | | | CN | 103509478 A | 15-01-2014 |
| | | | EP | 2679332 A1 | 01-01-2014 |
| | | | JP | 2014005372 A | 16-01-2014 |
| | | | US | 2013344326 A1 | 26-12-2013 |
| EP 2722376 | A1 | 23-04-2014 | CA | 2839610 A1 | 20-12-2012 |
| | | | CN | 103608419 A | 26-02-2014 |
| | | | EP | 2722376 A1 | 23-04-2014 |
| | | | JP | 2013018963 A | 31-01-2013 |
| | | | US | 2014113131 A1 | 24-04-2014 |
| | | | WO | 2012172932 A1 | 20-12-2012 |
| EP 2722375 | A1 | 23-04-2014 | CA | 2839533 A1 | 20-12-2012 |
| | | | CN | 103597046 A | 19-02-2014 |
| | | | EP | 2722375 A1 | 23-04-2014 |
| | | | JP | 2013018964 A | 31-01-2013 |
| | | | US | 2014120344 A1 | 01-05-2014 |
| | | | WO | 2012172934 A1 | 20-12-2012 |
| US 2012291845 | A1 | 22-11-2012 | CN | 102687285 A | 19-09-2012 |
| | | | JP | 2011165967 A | 25-08-2011 |
| | | | US | 2012291845 A1 | 22-11-2012 |
| | | | WO | 2011099390 A1 | 18-08-2011 |

EPO FORM P0459

For more details about this annex : see Official Journal of the European Patent Office, No. 12/82

**EP 3 012 288 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004235194 A
- EP 2679332 A1
- US 20080014407 A1
- WO 2011122437 A1
- GB 24923048 A
- EP 1184437 A2
- US 20120018903 A1